# EUROPÄISCHE PATENTANMELDUNG

(11) **EP 0 768 650 A2**
(43) Veröffentlichungstag der Anmeldung: **16.04.1997**
(21) Anmeldenummer: 96115283.2
(22) Anmeldetag: 24.09.1996
(51) Int. Cl.: G11B 7/095, G11B 7/26, G11B 7/09, G01B 11/02

(54) **Vorrichtung zum Laserstrahlbelichten eines kreisscheibenförmigen Substrates**

(30) Priorität: 09.10.1995 DE 19537405
(71) Anmelder: Balzers und Leybold Deutschland Holding Aktiengesellschaft, 63450 Hanau (DE)
(72) Erfinder: Hensel, Bernd, 65760 Eschborn (DE); Hofmann, Friedrich, 63654 Büdingen (DE); Koop, Hermann, Dr., 30952 Ronnenberg (DE); Kaiser, Paul, 81539 München (DE); Feick, Eberhart, 81249 München (DE); Süss, Ralf, 81927 München (DE)
(74) Vertreter: Schlagwein, Udo, Dipl.-Ing.

(57) **Zusammenfassung**

Bei einer Vorrichtung zum Laserstrahlbelichten eines kreisscheibenförmigen Substrates (5) ist auf einem Schlitten (2), welcher eine Substrataufnahme (4) aufweist, entlang der Vorschubbahn des Schlittens (2) ein Maßstab (15) angeordnet. Ihm gegenüber befindet sich nahe eines Laserstrahl-Objektivs (11) ein Sensor (14). Das Laserstrahl-Objektiv (11) ist in Vorschubrichtung des Schlittens (2) mittels eines Stellantriebs (18) begrenzt beweglich, so daß Vorschubfehler aufgrund der mit Hilfe des Maßstabs (15) gemessenen Positionen korrigiert werden können.

## Beschreibung

Die Erfindung betrifft eine Vorrichtung zum Laserstrahlbelichten eines kreisscheibenförmigen Substrates, welche ein in einer Halterung angeordnetes Laserstrahl-Objektiv und einen hierzu in einem Tisch mittels eines Radialantriebs quer verfahrbaren Schlitten hat, der eine auf einer von einem Drehantrieb antreibbaren Spindel angeordnete Substrataufnahme aufweist.

Für die Fertigung von Masterscheiben, mit denen optisch auslesbare Informationsträger, beispielsweise Compact-Disks erzeugt werden, ist es erforderlich, daß auf einer spiralförmig verlaufenden Spur der Masterscheibe entsprechend der digitalen Information mit Hilfe des Laserstrahls Pits in genau festgelegten Positionen plaziert werden. Dazu hat man bislang solche Vorrichtungen mit einem möglichst gleichförmigen Drehantrieb und Radialantrieb ausgestattet. Da jedoch Spurgenauigkeitsabweichungen von nur wenigen nm zulässig sind, reicht oftmals die Gleichförmigkeit des Radialantriebs nicht aus, um mit geringem Ausschuß qualitativ hochwertige Masterscheiben zu erzeugen. Falls mittels Meßsystemen Ungleichförmigkeiten der Radialbewegung erkannt werden sollen, setzt man Drehgeber und teilweise auch Laser-Interferometer ein. Die Ortsauflösung von Drehgebern ist jedoch relativ gering, so daß sie für diesen Anwendungsfall nicht befriedigen. Laser-Interferometer sind teuer und hinsichtlich ihrer Meßgenauigkeit Umwelteinflüssen ausgesetzt, welche nur mit hohem Aufwand und auch dann nur unvollkommen kompensiert werden können.

Der Erfindung liegt das Problem zugrunde, eine Vorrichtung der eingangs genannten Art so zu gestalten, daß sich mit möglichst geringem Aufwand eine hohe Gleichförmigkeit der Radialbewegung und damit eine hohe Spurgenauigkeit erzielen läßt.

Dieses Problem wird erfindungsgemäß dadurch gelöst, daß zur Bestimmung der Position des Schlittens relativ zum Laserstrahl-Objektiv eine Meßeinrichtung angeordnet ist und daß zur Feinkorrektur der Position des Laserstrahl-Objektivs relativ zur Substrataufnahme das Objektiv oder der Schlitten relativ zu seinem Radialantrieb mittels eines von den Signalen des Sensors gesteuerten Stellantriebs verschiebbar angeordnet ist.

Durch eine solche Meßeinrichtung läßt sich während des Laserstrahlbelichtens des Substrats die Position des Objektivs relativ zum Substrat in Radialrichtung genau bestimmen. Dadurch wird es möglich, durch Überlagerung geringer Stellbewegungen zur Radialbewegung Fehler im Radialvorschub automatisch zu korrigieren. Hierdurch läßt sich mit verhältnismäßig geringem Aufwand eine äußerst hohe Spurgenauigkeit erzielen. Mit der erfindungsgemäßen Vorrichtung lassen sich CD's mit besonders hoher Speicherdichte erzeugen, da sie infolge besonders enger Toleranzen von +/- 10nm besonders geringe Spurabstände zuläßt.

Besonders einfach ist die Vorrichtung gestaltet, wenn die Meßeinrichtung aus einem am Tisch oder dem Schlitten befestigten, in Bewegungsrichtung des Schlittens verlaufenden Maßstab und einem diesem gegenüber am Schlitten oder Tisch befestigten, den Maßstab abtastenden Sensor gebildet ist.

Die Bewegung in Radialrichtung kann besonders genau erfaßt werden, wenn gemäß einer anderen Ausgestaltung der Erfindung die Meßeinrichtung ein Phasengitter-Meßsystem ist.

Alternativ ist es jedoch auch möglich, daß die Meßeinrichtung ein Laserinterferometer ist.

Die Nachteile der Umweltkompensation lassen sich bei einer solchen Meßeinrichtung dadurch kompensieren, daß das Laserinterferometer ein Differential-Laserinterferometer mit einem am Laserstrahl-Objektiv befestigten Referenzspiegel und einem beweglichen Spiegel auf dem Schlitten oberhalb der Scheibenaufnahme ist.

Gemäß der Erfindung kommt es darauf an, eine Relativbewegung zwischen dem Schlitten und dem Objektiv in Radialrichtung zu erzeugen. Da diese Relativbewegung zur Kompensation von Positionsfehlern sehr rasch erfolgen muß, ist es von Vorteil, wenn hierbei möglichst geringe Massen bewegt werden. Das läßt sich gemäß einer besonders vorteilhaften Weiterbildung der Erfindung dadurch verwirklichen, daß das Laserstrahl-Objektiv in Bewegungsrichtung des Schlittens mit dem Stellantrieb begrenzt verstellbar ist. Durch das Verstellen des Objektivs läßt sich im Vergleich zu einer Verstellung des Schlittens eine wesentlich größere Dynamik erreichen.

Zur weiteren Erhöhung der Meßgenauigkeit ist es günstig, wenn der Sensor an der Halterung des Laserstrahl-Objektivs möglichst nahe am Laserstrahl-Objektiv und der Maßstab am Schlitten möglichst nahe der Spindel der Substrataufnahme befestigt sind.

Die erforderlichen, geringen Stellbewegungen erfolgen besonders rasch und präzise, wenn der Stellantrieb zum Korrigieren der Position des Objektivs oder des Schlittens ein Piezotranslator ist.

Ungenauigkeiten bezüglich der Stellbewegungen durch Elastizitäten lassen sich dadurch mit relativ geringem Aufwand ausschließen, daß der Piezotranslator an einem Festkörpergelenktisch vorgesehen ist.

Der Festkörpergelenktisch kann unterschiedlich gestaltet sein. Eine konstruktiv besonders einfache Ausführungsform, welche für den Anwendungsfall der Herstellung von optischen Datenträgern eine ausreichend hohe Stellgenauigkeit hat, besteht darin, wenn der Festkörpergelenktisch einen an einem Bauteil zu befestigenden, geschlossenen Rahmen hat, in welchem durch Gelenke verbunden ein Innenteil angeordnet ist, wenn der Piezotranslator einerseits gegen den Rahmen, andererseits gegen das Innenteil abgestützt ist und wenn das Innenteil mit Hilfe einer Druckfeder gegen den Piezotranslator vorgespannt ist.

Zu Stellfehlern führende Verkantungskräfte lassen sich dadurch auf einfache Weise ausschließen, daß gemäß einer anderen Weiterbildung der Erfindung der Piezotranslator jeweils unter Zwischenschaltung einer Kugel am Rahmen und am Innenteil und die Druckfeder ebenfalls über eine Kugel am Innenteil abgestützt sind.

Der Festkörpergelenktisch ist besonders kompakt ausgebildet, wenn das Innenteil eine Sackbohrung hat, in welche der Piezotranslator greift.

Die Erfindung läßt verschiedene Ausführungsformen zu. Eine davon ist stark schematisch in der Zeichnung dargestellt und wird nachfolgend beschrieben. Diese zeigt in
- Fig.1: eine Seitenansicht einer erfindungsgemäßen Vorrichtung,
- Fig.2: eine Draufsicht auf die Vorrichtung,
- Fig.3: einen Schnitt durch einen Festkörpergelenktisch nach der Erfindung.

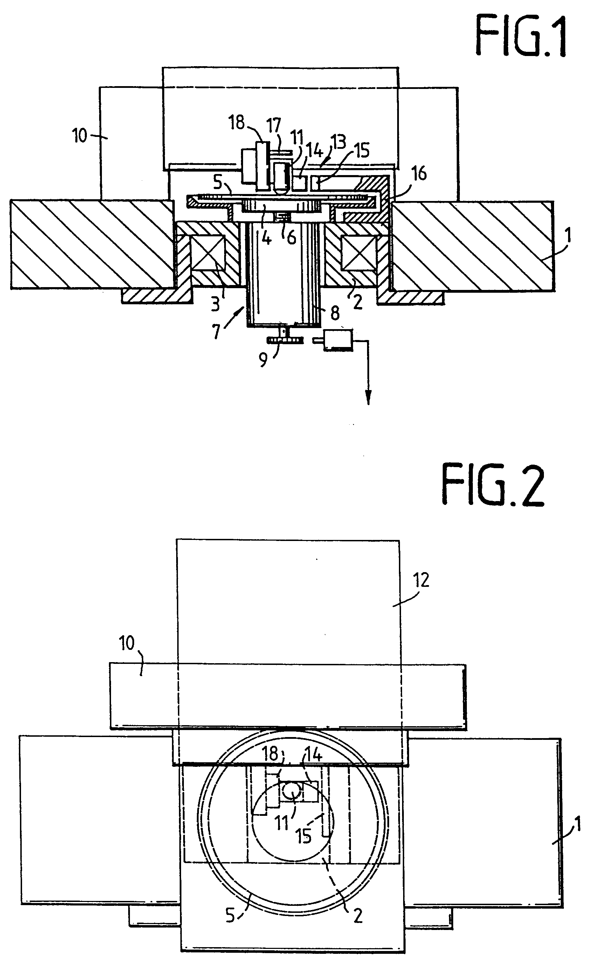

Die Figur 1 zeigt einen Tisch 1, in welchem ein Schlitten 2 auf Luftlagern 3 quer zur Zeichnungsebene verfahrbar ist. Der Schlitten 2 hat eine Substrataufnahme 4, auf der ein als Masterscheibe dienendes Substrat 5 durch Unterdruck gehalten ist. Die Substrataufnahme 4 ist am oberen Ende einer Spindel 6 vorgesehen, welche ihrerseits in einem nicht gezeigten Luftlager des Schlittens 2 drehbar gelagert ist. Zum Antrieb der Spindel 6 und damit der Substrataufnahme 4 dient ein Drehantrieb 7 mit einem Motor 8, der zusammen mit einem Drehimpulsgeber 9 am unteren Ende der Spindel 6 angeflanscht ist.

Über den Tisch 1 führt eine Brücke 10, welche ein Laserstrahl-Objektiv 11 haltert.

Zum Verfahren des Schlittens 2 dient ein in Figur 2 angedeuteter Radialantrieb 12. Arbeitet dieser, dann bewegt sich das Substrat 5 quer zu dem Laserstrahl-Objektiv 11, so daß infolge der gleichzeitigen Drehung der Substrataufnahme 4 mit dem Substrat 5 Pits auf einer spiralförmigen Spur auf dem Substrat 5 belichtet werden können.

Wichtig für die Erfindung ist eine Meßeinrichtung 13, welche bei diesem Ausführungsbeispiel einen möglichst nahe am Objektiv befestigten Sensor 14 und einen auf dem Tisch 1 befestigten, in Bewegungsrichtung des Tisches 1 ausgerichteten Maßstab 15 hat. Die Figur 1 läßt einen uförmigen Träger 16 erkennen, welcher über das Substrat 5 greift und dafür sorgt, daß der Maßstab 15 unmittelbar vor dem Sensor 14 verläuft.

Das Objektiv 11 wird von einer Halterung 17 getragen, welcher einen Stellantrieb 18 mit einem Piezotranslator aufweist. Hierdurch lassen sich geringe Stellbewegungen des Objektivs 11 auf der Vorschubachse des Tisches 1 erreichen.

Die Figur 2 zeigt insbesondere die Ausrichtung des Maßstabes 15 in Bewegungsrichtung des Schlittens 2. Dadurch lassen sich mit dem Sensor 14 ständig genaue Informationen über die Position des Schlittens 2 relativ zum Laserstrahl-Objektiv 11 gewinnen. Entsprechen diese infolge von Ungenauigkeiten des Radialantriebs 12 nicht dem Sollwert, so wird die Position durch Verschieben des Laserstrahl-Objektivs 11 mittels des Stellantriebs 18 korrigiert.

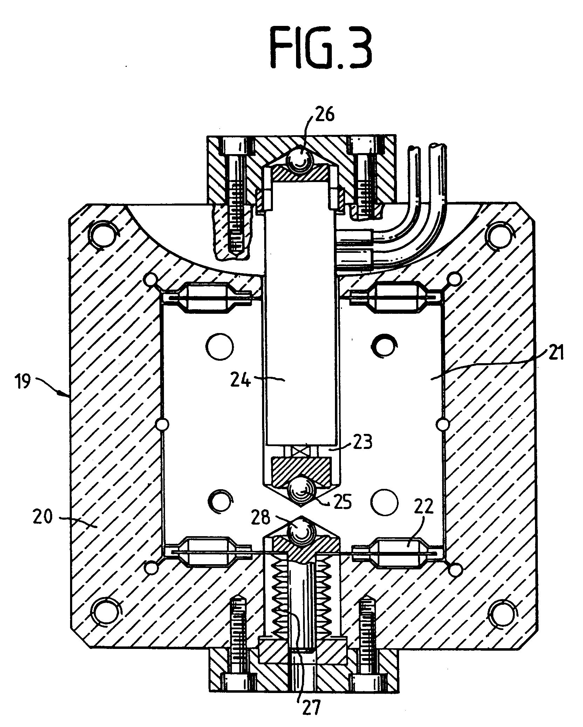

Die Figur 3 zeigt einen Schnitt durch einen Festkörpergelenktisch 19. Dieser besteht aus einem geschlossenen Rahmen 20 und einem darin begrenzt verschieblich angeordneten Innenteil 21. Dieses Innenteil 21 ist durch vier schematisch angedeutete Gelenke 22 mit dem Rahmen 20 verbunden. Das Innenteil 21 hat eine Sackbohrung 23, in die ein Piezotranslator 24 aus einzelnen Piezoelementen greift und der sich über eine Kugel 25 gegen den Boden der Sackbohrung 23 und mit einer Kugel 26 am Rahmen 20 bzw. einem mit ihm fest verbundenen Bauteil abstützt.

Im unteren Bereich der Figur 3 erkennt man eine Druckfeder 27, welche einerseits am Rahmen 20, andererseits über eine Kugel 28 am Innenteil 21 abgestützt ist und dadurch das Innenteil 21 gegen den Piezotranslator 24 vorspannt.

Wird der Piezotranslator 24 mit unterschiedlichen Spannungen beaufschlagt, dann verändert er seine Länge im Nanometerbereich und verschiebt deshalb das Innenteil 21 relativ zum Rahmen 20. Wenn man zum Beispiel den Rahmen 20 ortsfest anordnet und das Innenteil 21 mit dem Laserstrahl-Objektiv 11 verbindet, dann lassen sich auf diese Weise geringe Verstellbewegungen des Laserstrahl-Objektivs 11 erzeugen.

### Bezugszeichenliste

- 1: Tisch
- 2: Schlitten
- 3: Luftlager
- 4: Substrataufnahme
- 5: Substrat
- 6: Spindel
- 7: Drehantrieb
- 8: Motor
- 9: Drehimpulsgeber
- 10: Brücke
- 11: Laserstrahl-Objektiv
- 12: Radialantrieb
- 13: Meßeinrichtung
- 14: Sensor
- 15: Maßstab
- 16: Träger
- 17: Halterung
- 18: Stellantrieb
- 19: Festkörpergelenktisch
- 20: Rahmen
- 21: Innenteil
- 22: Gelenk
- 23: Sackbohrung
- 24: Piezotranslator
- 25: Kugel
- 26: Kugel
- 27: Druckfeder
- 28: Kugel

## Patentansprüche

1. Vorrichtung zum Laserstrahlbelichten eines kreisscheibenförmigen Substrates, welche ein in einer Halterung angeordnetes Laserstrahl-Objektiv und einen hierzu in einem Tisch mittels eines Radialantriebs quer verfahrbaren Schlitten hat, der eine auf einer von einem Drehantrieb antreibbaren Spindel angeordnete Substrataufnahme aufweist, **dadurch gekennzeichnet**, daß zur Bestimmung der Position des Schlittens (2) relativ zum Laserstrahl-Objektiv (11) eine Meßeinrichtung (13) angeordnet ist und daß zur Feinkorrektur der Position des Laserstrahl-Objektivs (11) relativ zur Substrataufnahme (4) das Laserstrahl-Objektiv (11) oder der Schlitten (2) relativ zu seinem Radialantrieb (12) mittels eines von den Signalen des Sensors (14) gesteuerten Stellantriebs (18) verschiebbar angeordnet ist.

2. Vorrichtung nach Anspruch 1, **dadurch gekennzeichnet**, daß die Meßeinrichtung (13) aus einem am Tisch (1) oder dem Schlitten (2) befestigten, in Bewegungsrichtung des Schlittens (2) verlaufenden Maßstab (15) und einem diesem gegenüber am Schlitten (2) oder Tisch (1) befestigten, den Maßstab (15) abtastenden Sensor (14) gebildet ist.

3. Vorrichtung nach Anspruch 2, **dadurch gekennzeichnet**, daß die Meßeinrichtung (13) ein Phasengitter-Meßsystem ist.

4. Vorrichtung nach Anspruch 1, **dadurch gekennzeichnet**, daß die Meßeinrichtung (13) ein Laserinterferometer ist.

5. Vorrichtung nach Anspruch 3, **dadurch gekennzeichnet**, daß das Laserinterferometer ein Differential-Laserinterferometer mit einem am Laserstrahl-Objektiv (11) befestigten Referenzspiegel und einem beweglichen Spiegel auf dem Schlitten oberhalb der Substrataufnahme (4) ist.

6. Vorrichtung nach zumindest einem der vorangehenden Ansprüche, **dadurch gekennzeichnet**, daß das Laserstrahl-Objektiv (11) in Bewegungsrichtung des Schlittens (2) mit dem Stellantrieb (18) begrenzt verstellbar ist.

7. Vorrichtung nach zumindest einem der vorangehenden Ansprüche, **dadurch gekennzeichnet**, daß der Sensor (14) an der Halterung (17) des Laserstrahl-Objektivs (11) möglichst nahe am Laserstrahl-Objektiv (11) und der Maßstab (15) am Schlitten (2) möglichst nahe der Spindel (6) der Substrataufnahme (4) befestigt sind.

8. Vorrichtung nach zumindest einem der vorangehenden Ansprüche, **dadurch gekennzeichnet**, daß der Stellantrieb (18) zum Korrigieren der Position des Laserstrahl-Objektivs (11) oder des Schlittens (2) ein Piezotranslator (24) ist.

9. Vorrichtung nach Anspruch 8, **dadurch gekennzeichnet**, daß der Piezotranslator (24) an einem Festkörpergelenktisch (19) vorgesehen ist.

10. Vorrichtung nach Anspruch 9, **dadurch gekennzeichnet**, daß der Festkörpergelenktisch (19) einen an einem Bauteil zu befestigenden, geschlossenen Rahmen (20) hat, in welchem durch Gelenke (22) verbunden ein Innenteil (21) angeordnet ist, daß der Piezotranslator (24) einerseits gegen den Rahmen (20), andererseits gegen das Innenteil (21) abgestützt ist und daß das Innenteil (21) mit Hilfe einer Druckfeder (27) gegen den Piezotranslator (24) vorgespannt ist.

11. Vorrichtung nach Anspruch 10, **dadurch gekennzeichnet**, daß der Piezotranslator (24) jeweils unter Zwischenschaltung einer Kugel (25, 26) am Rahmen (20) und am Innenteil (21) und die Druckfeder (27) ebenfalls über eine Kugel (28) am Innenteil (21) abgestützt sind.

12. Vorrichtung nach zumindest einem der vorangehenden Ansprüche, **dadurch gekennzeichnet**, daß das Innenteil (21) eine Sackbohrung (23) hat, in welche der Piezotranslator (24) greift.
